(19) Europäisches Patentamt
European Patent Office
Office européen des brevets

(11) Veröffentlichungsnummer: **0 144 566**
**B1**

# (12) EUROPÄISCHE PATENTSCHRIFT

(45) Veröffentlichungstag der Patentschrift: **13.01.88**

(51) Int. Cl.⁴: **C 22 B 11/04**, C 01 G 5/00, C 01 G 7/00, C 01 G 55/00, C 22 B 3/00

(21) Anmeldenummer: **84110795.6**

(22) Anmeldetag: **11.09.84**

## (54) Verfahren zur Abtrennung und Reinigung der Platingruppenmetalle.

(30) Priorität: **05.11.83 DE 3340056**

(43) Veröffentlichungstag der Anmeldung: **19.06.85 Patentblatt 85/25**

(45) Bekanntmachung des Hinweises auf die Patenterteilung: **13.01.88 Patentblatt 88/2**

(84) Benannte Vertragsstaaten: **AT BE CH DE FR GB IT LI LU NL SE**

(56) Entgegenhaltungen:
**US-A-4 368 073**

**CHEMICAL ABSTRCTS, Band 83, 1975, Seite 791, Nr. 125678x, COLUMBUS,OHIO (US), Y. YAGI: "Analytical chemical studies of thiourea derivatives. 2. Spectrophotometric determination of palladium with a new chelating reagent, 1-methyl-3-(4-methyl-2-thiazolyl) thiourea"**
**CHEMICAL ABSTRACTS, Band 80, 1974, Seite 522, COLUMBUS,OHIO (US), Nr. 115655m, E.A. JONES: "Use of DDTU (N,N'-diphenyl-S-(1-decyl)isothiourea) as an analytical reagent for the noble metals"**
**CHEMICAL ABSTRACTS, Band 97, 1982, Seite 775, Nr. 174070r, COLUMBUS,OHIO (US), R. YODA: "Spectrophotometric determination of palladium with a new chelating reagent, N,N-dimethyl-N'-(4-methyl-4-nitro-2-thiazolyl)thiourea"**

(73) Patentinhaber: **Degussa Aktiengesellschaft, Weissfrauenstrasse 9, D-6000 Frankfurt am Main 1 (DE)**

(72) Erfinder: **König, Karl- Heinz, Prof. Dr., Kirchhainer Strasse 13, D-6000 Frankfurt am Main 50 (DE)**
Erfinder: **Schuster, Michael, Dipl.- Chem., Haintalstrasse 20, D-6000 Frankfurt- Harheim (DE)**
Erfinder: **Hollmann, Dieter, Dipl.- Chem., Dieselstrasse 14, D-6100 Darmstadt (DE)**
Erfinder: **Schlodder, Rainer, Dr. Dipl.- Chem., Ulmenstrasse 63, D-6458 Rodenbach I (DE)**

(56) Entgegenhaltungen: (Fortsetzung)
**CHEMICAL ABSTRACTS, Band 95, 1981, Seite 729, Nr. 17504b, COLUMBUS,OHIO (US), R. YODA: "Spectrophotometric determination of palladium (II) with a new chelating reagent, N,N-dimethyl-N'-(4-phenyl-2-thiazolyl)thiourea"**

**EP 0 144 566 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Abtrennung und Reinigung der Platingruppenmetalle von übrigen Edel- und Nichtedelmetallen aus wässrigen sauren Lösungen durch Fällen mit einer organischen Substanz, Abtrennen und Aufarbeiten der Niederschlage.

Die derzeit bekannten Verfahren zur Abtrennung und Reinigung der Platingruppenmetalle Platin, Palladium, Rhodium, Ruthenium, Iridium, Osmium aus sauren wässrigen Lösungen, die auch Unedelmetalle oder Gold und Silber enthalten, benötigen eine große Zahl von einzelnen Verfahrensschritten und sind sehr zeitaufwendig. Außerdem wachsen die Schwierigkeiten der bekannten Aufarbeitungsverfahren mit der Zahl der abzutrennenden Platinmetalle und der anwesenden Nichtedelmetalle, wie Kupfer, Eisen, Nickel, Kobalt, Zink oder Mangan.

Bekannte Verfahren arbeiten zum Teil mit organischen Fällungsund Extraktionsmitteln, wie z. B. Mercaptopyridin-N-oxid (US-PS 4 368 073), doch sind diese Reagenzien oft wenig spezifisch oder nicht generell fur alle Platinmetalle einsetzbar.

Es war daher die Aufgabe der vorliegenden Erfindung, ein Verfahren zur Abtrennung und Reinigung der Platingruppenmetalle von übrigen Edel- und Nichtedelmetallen aus wässrigen sauren Lösungen durch Fällen mit einer organischen Substanz, Abtrennen und Aufarbeitung der Niederschläge zu schaffen, mit dem sich auf einfache Weise möglichst quantitativ alle Platinmetalle abtrennen und reinigen lassen.

Diese Aufgabe wurde erfindungsgemäß dadurch gelöst, daß als organische Substanz ein substituierter Thioharnstoff der allgemeinen Formel

$R_1 R_2 N - CS - NH - CO - R_3$ oder

$R_1 R_2 N - CS - NH - COOR_3$, wobei

$R_1$, $R_2$ und $R_3$ = substituierte oder unsubstituierte Alkyl-, Aryl- oder Aralkylgruppen bedeuten, bei einem pH-Wert kleiner als 4 und bei Temperaturen zwischen 15 und 100° C eingesetzt wird.

Vorzugsweise verwendet man einen Thioharnstoff, bei dem $R_1$ und $R_2$ aus je einer Methyl-, n-Butyl- oder n-Hexylgruppe und $R_3$ aus einer Phenylgruppe bestehen. Diese N,N-Dialkyl-N'-benzoylthioharnstoffe lassen sich leicht aus den entsprechenden sekundären Aminen, Benzoylchlorid und Kaliumthiocyanat herstellen.

Bei Verwendung von Substanzen der allgemeinen Formel $R_1 R_2 N - CS - NB - COOR_3$ verwendet man vorzugsweise Verbindungen, bei denen $R_3$ aus einer Methyl- oder Äthylgruppe besteht. Die Synthese erfolgt aus den entsprechenden sekundären Aminen, Chlorameisensäureestern und Kaliumthiocyanat.

Die Platinmetalle können mit den erfindungsgemäßen Thioharnstoffverbindungen aus der wässrigen, insbesondere salzsauren Lösung ausgefällt werden, indem man eine alkoholische Lösung der Thioharnstoffverbindung der salzsauren Lösung zugibt. In Wasser bzw. verdünnten Säuren sind diese Thioharnstoffe schwerlöslich. Das Fällungsmittel wird im stöchiometrischen Überschuß zugesetzt. Dabei geht man von einer Komplexbildungsreaktion beispielsweise der Form $Me^{2+}$ + 2DMBT Me $(DMBT)_2$ + $2H^+$ aus. Die Metallkomplexe sind in wässriger salzsaurer Lösung schwerlöslich und bilden einen feinkristallinen, gut filtrierbaren Niederschlag.

Die nach diesem Verfahren abgetrennten Platingruppenmetalle können nach bekannten Verfahren, beispielsweise durch Verglühen, aufgearbeitet und auch voneinander getrennt werden. Die im sauren pH-Bereich ebenfalls mit ausfallenden Elemente Kupfer und Eisen können durch Digerieren des Niederschlags in heißer 3 molarer Schwefelsäure wieder gelöst werden, während die Komplexe der Platingruppenmetalle unlöslich in 3 molarer Schwefelsäure sind.

Je nach Zusammensetzung der sauren Lösungen können durch Wahl des pH-Wertes und der Temperatur auch einzelne Platinmetalle spezifisch von allen anderen abgetrennt werden.

Folgende Tabelle zeigt die pH-Bereiche, in denen einige der entsprechenden Metallchelate gefällt werden können, gültig für N,N-Dimethyl-N'-benzoylthioharnstoff (DMBT) bei einer Metallkonzentration von $10^{-2}$ mol/l.

| Metall | PH-Bereich Fällung |
|---|---|
| $Pt^{II}$ | 1 - 9 |
| $Pt^{IV}$ | 1 - 9 |
| $Pd^{II}$ | 0 - 14 |
| $Ru^{III}$ | 1 - 4 |
| $Rh^{III}$ | 1 - 14 |
| $Os^{III}$ | 1 - 11 |
| $Ir^{III}$ | 2 - 12 |
| $Ag^{I}$ | 1 - 6 |
| $Cu^{II}$ | 0 - 7 |
| $Co^{III}$ | 5,5 - 10 |
| $Ni^{II}$ | 4,5 - 11 |
| $Zn^{II}$ | 5 - 9 |

Aus diesen Werten lassen sich die jeweiligen Abtrennungsparameter für ein vorgegebenes Lösungsgemisch auswählen.

Auch die übrigen komplexierbaren Unedelmetalle, wie Kadmium und Blei, werden erst bei pH-Werten oberhalb 4 gefällt.

Folgende Beispiele sollen das erfindungsgemäße Verfahren näher erläutern:

1. 50 ml einer 3molar salzsauren Lösung der Zusammensetzung 2,0 g/l Pt, 1,8 g/l Pd, 0,5 g/l Rh, 0,8 g/1 Ir, 0,05 g/l Ru, 0,05 g/l Os, 0,6 g/l Cu, 4,8 g/l Fe, 1,0 g/l Ni, 0,6 g/l Zn, 0,4 g/l Co und 0,2 g/l Mn wurden durch Zugabe von verdünnter NaOH unter starkem Rühren auf pH 2,5 gestellt. Unter Rühren wurden 40 ml einer äthanolischen N,N-Dimethyl-N'-benzoylthioharnstoff-Lösung

(75 g/l) zugesetzt und die Mischung 20 Minuten zum Sieden erhitzt. Der gebildete Niederschlag, der die Platinmetalle, Kupfer und Eisen enthält, wurde abgesaugt und mit Wasser gewaschen. Das Filtrat war frei von Platinmetallen und Kupfer.

Durch Aufschlämmen des Niederschlags in heißer 3 molarer Schwefelsäure ließen sich die DMBT-Komplexe von Kupfer und Eisen vollständig auflösen, sodaß der Niederschlag nur noch die Platinmetalle enthielt. Die zum Auswaschen von Kupfer und Eisen eingesetzte Schwefelsäure war frei von Platinmetallen (< 10 ppm).

Der restliche Niederschlag wurde verglüht, das Glühgut in Königswasser gelöst und aufgearbeitet.

2. 500 ml einer 2molar salzsauren wässrigen Lösung der Zusammensetzung 0,2 g/l Pt, 0,35 g/l Pd, 0,47 g/l Rh, 0,08 g/l Ir, 0,01 g/l Ru, 0,86 g/l Cu und 0,45 g/l Fe (übrige Unedelmetalle <0,1 g/l) wurden durch Zugabe verdünnter Natronlauge auf pH = 2,5 eingestellt. Unter Rühren wurden 150 ml einer äthanolischen N,N-Dimethyl-N'-benzoylthioharnstoff-Lösung (75 g/l) zugesetzt und die Mischung 20 Minuten zum Sieden erhitzt. Der gebildete Niederschlag, der die Platinmetalle, Kupfer und Eisen enthielt, wurde wie in Beispiel 1 weiterbehandelt.

**Patentansprüche**

1. Verfahren zur Abtrennung und Reinigung der Platingruppenmetalle von übrigen Edel- und Nichtedeletallen aus wässrigen sauren Lösungen durch Fällen mit einer organischen Substanz, Abtrennen und Aufarbeitung der Niederschläge, dadurch gekennzeichnet, daß als organische Substanz ein substituierter Thioharnstoff der allgemeinen Formel $R_1 R_2 N - CS - NH-CO - R_3$ oder $R_1 R_2 N - CS- NH - COOR_3$, wobei $R_1$, $R_2$ und $R_3$ substituierte oder unsubstituierte Alkyl-, Aryl- oder Aralkylgruppen bedeuten, bei einem pH-Wert kleiner als 4 und bei Temperaturen zwischen 15 und 100° C eingesetzt wird.

2. Verfahren nach Anspruch 1, dadurch gekennzeichnet, daß $R_1$ und $R_2$ je eine Methyl-, n-Butyl- oder n-Hexylgruppe und $R_3$ eine Phenylgruppe bzw. bei Substanzen der allgemeinen Formel $R_1 R_2 N - CS - NH - COOR_3$ eine Methyl- oder Äthylgruppe bedeuten.

3. Verfahren nach Anspruch 1 und 2, dadurch gekennzeichnet, daß die Fällung aus wässriger, salzsaurer Lösung bei Temperaturen zwischen 80 und 110° C vorgenommen wird.

**Claims**

1. A process for separating and purifying platinum group metals from other precious and base metals from aqueous acidic solutions by precipitation with an organic substance, separation and working up of the precipitates, characterised in that the organic substance used is a substrate thiourea corresponding to the general formula $R_1R_2$-CS-NH-CO-$R_3$ or $R_1R_2$N-CS-NH-COOR$_3$, wherein $R_1$, $R_2$ and $R_3$ represent substituted or unsubstituted alkyl, aryl or aralkyl groups, at a pH of less than 4 and at temperatures of between 15 and 100° C.

2. A process according to Claim 1, characterised in that $R_1$ and $R_2$ each represent a methyl, n-butyl or n-hexyl group and $R_3$ represents a phenyl group or, with substances corresponding to the general formula $R_1R_2$N-CS-NH-COOR$_3$, a methyl or ethyl group.

3. A process according to Claims 1 and 2, characterised in that precipitation from aqueous hydrochloride solution is carried out at temperatures of between 80 and 110° C.

**Revendications**

1. Procédé pour la séparation d'avec d'autres métaux précieux et métaux non précieux et la purification des métaux du groupe du platine, à partir de solutions aqueuses acides, par précipitation avec une substance organique, séparation et traitement final des précipités, caractérisé en ce que l'on utilise en tant que substance organique une thiourée substituée de formule générale $R_1 R_2N$ - CS - NH - CO - $R_3$ ou $R_1 R_2$ N - CS - NH - COOR$_3$, $R_1$, $R_2$ et $R_3$ représentent des groupes alkyle, aryle ou aralkyle substitués ou non substitués, à un pH inférieur à 4, et à des températures comprises entre 75 et 100° C.

2. Procédé selon la revendication 1, caractérisé en ce que $R_1$ et $R_2$ représentent chacun un groupe methyle, n-butyle ou n-hexyle, et $R_3$ représente un groupe phényle, ou, dans le cas de substances de formule générale $R_1 R_2$ N - CS - NH - COOR$_3$, un groupe méthyle ou éthyle.

3. Procédé selon l'une quelconque des revendications 7 et 2, caractérisé en ce que l'on effectue la précipitation hors d'une solution aqueuse chlorhydrique, à des températures comprises entre 80 et 110° C.